(19) Europäisches Patentamt / European Patent Office / Office européen des brevets

(11) **EP 2 763 027 B1**

(12) **EUROPEAN PATENT SPECIFICATION**

(45) Date of publication and mention
of the grant of the patent:
**16.09.2015 Bulletin 2015/38**

(51) Int Cl.:
***G06F 3/12*** *(2006.01)*

(21) Application number: **13193516.5**

(22) Date of filing: **19.11.2013**

(54) **Image processing apparatus, an image processing method, and an image processing program**

Bildverarbeitungsvorrichtung, Bildverarbeitungsverfahren und Bildverarbeitungsprogramm

Appareil de traitement d'images, procédé de traitement d'images et programme de traitement d'images

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.01.2013 JP 2013015553**

(43) Date of publication of application:
**06.08.2014 Bulletin 2014/32**

(73) Proprietor: **SCREEN Holdings Co., Ltd.**
**Kyoto 602-8585 (JP)**

(72) Inventors:
• **Segawa, Hiroyuki**
**KYOTO-SHI, Kyoto 602-8585 (JP)**
• **Ueda, Kohei**
**KYOTO-SHI, Kyoto 602-8585 (JP)**
• **Kato, Tomotaka**
**KYOTO-SHI, Kyoto 602-8585 (JP)**
• **Yamaguchi, Rui**
**KYOTO-SHI, Kyoto 602-8585 (JP)**

(74) Representative: **Kilian Kilian & Partner**
**Aidenbachstraße 54**
**81379 München (DE)**

(56) References cited:
**EP-A2- 2 333 655        US-A1- 2010 195 139**
**US-A1- 2012 147 413**

**Description**

BACKGROUND OF THE INVENTION

1. Field of the Invention

This invention relates to an image processing apparatus, an image processing method and an image processing program in or for a printing system which does variable printing.

2. Description of the Related Art

Conventionally, a printing system is known, in which a digital printing machine or the like prints, on a recording medium, print data of output images for the printing machine written in a page description language, through RIP (Raster Image Processor) processing which converts the data into raster data printable by the printing machine.

Such a printing system carries out a print inspecting process for checking results of the RIP processing, and a print inspecting process for checking whether a printing state of prints outputted from the printing machine is appropriate. The print inspecting process for checking results of the RIP processing uses, as standard image data, image data obtained from RIP processing of manuscript data turned in as a first proof and, as image data subjected to print inspection, image data obtained from RIP processing of manuscript data turned in at the time of a revised proof which has been revised based on results of the first proof, and compares the standard image data and the image data subjected to print inspection. The print inspecting process for checking whether a printing state of prints outputted from the printing machine is appropriate uses, as standard image data, the image data obtained from the RIP processing of the manuscript data turned in as the first proof and, as image data subjected to print inspection, image data obtained by reading proof results with a scanner or CCD camera, and compares the standard image data and the image data subjected to print inspection. Digital print inspection is conducted by comparing such standard image data and image data for print inspection on a pixel-by-pixel basis, and detecting errors from difference values in color density (tone values) between the pixels (see Japanese Unexamined Patent Publication No. 2004-279445).

On the other hand, in recent years, there have been increasing opportunities for file data with complicated data structures and file data prepared by newly developed applications to be turned in printing systems as print data, and increasing cases where intended printing results cannot be obtained due to trouble at the time of RIP processing Trouble occurring at the time of RIP processing will be described taking for example print data for variable printing which includes part objects (reuse parts) used on different pages a plurality of times. In the RIP processing of print data for variable printing, RIP results of reuse parts are cached for use in the RIP processing of similar parts. On the other hand, even if the same reuse part is used for the first page and second page of print data, for example, when matrices or clips relating to the reuse part are different, the cache of the reuse part created by the RIP processing of the first page is not used in the RIP processing of the reuse part for the second page. However, there is a case where the RIP processing for the second page inadvertently uses the cache of the reuse part for the first page not normally used, and this has been the cause of failing to obtain intended printing results.

In a printing system which does variable printing, printing contents differ from print to print, unlike commercial printing which outputs the same print in large quantities. Such a printing system cannot print proof sheets for a large quantity of prints, for the operator to check the results visually. In the printing system which does variable printing, therefore, a digital print inspection is carried out using image data produced in a process of converting print data written in a page description language into raster data for printing.

However, with the conventional digital print inspection, the larger the number of print copies is, the longer time would be taken in a print inspection carried out for all manuscript data. Further, the RIP processing goes through different handling processes when the RIP processing is done in order to create standard image data, and when it is done in order to create output data for use in a printing machine. This can result in a minute difference between the standard image data and the image data subjected to print inspection to be compared at the time of print inspection. When the print inspection is carried out using a precise compare algorithm which allows disregard of such minute difference, there arises a problem of extended print inspection time.

If several parts of manuscript data are taken up for print inspection, print inspection time can be drastically shortened, compared with the case of inspecting the entire data. However, this gives rise to a problem of lowering the reliability of print inspection.

US 2012/147413 discloses a system for producing and inspecting print document having static and variable content. A bitmap (page) is produced from received print data and provided to an inspection unit that compares the bitmap objects with some reference object using an object type related inspection algorithm, the result driving the rest of the printing process.

**EP 2 763 027 B1**

## SUMMARY OF THE INVENTION

The object of this invention, therefore, is to provide an image processing apparatus, an image processing method and an image processing program which are, in variable printing, capable of performing a highly reliable digital print inspection with increased speed.

The above object is fulfilled, according to this invention, by an image processing apparatus for carrying out an electronic print inspection of raster data for printing created by converting manuscript data written in a page description language, comprising an attribute information acquiring device for acquiring attribute information including arrangement information on objects constituting each page by analyzing manuscript data for variable printing; an extracting device for specifying reuse part objects reused on a plurality of pages from the attribute information on the objects acquired by the attribute information acquiring device, acquiring from the manuscript data pages including the reuse part objects and use frequencies and arrangement information on each page of the reuse part objects, and extracting the pages including the reuse part objects on a basis of at least one page per reuse part object; a reference image data creating device for creating reference image data expressing an image state of the manuscript data; a conversion processing device for creating raster data by carrying out a conversion process of the manuscript data; an area specifying device for specifying, by using the arrangement information of the reuse part objects acquired by the extracting device, arrangement areas of the reuse part objects in the reference image data created by the reference image data creating device, and specifying arrangement areas of the reuse part objects in raster data created by the conversion processing device; and an image comparing device for carrying out an image comparing process at least once per reuse part object, using a predetermined compare algorithm, for the arrangement areas of the reuse part objects in the reference image data specified by the area specifying device concerning the pages extracted by the extracting device, and the arrangement areas of the reuse part objects in the raster data, and thereafter carrying out an image comparing process with respect to the plurality of pages of the manuscript data, using a high-speed compare algorithm of faster processing speed than the predetermined compare algorithm, for the arrangement areas of the reuse part objects in the raster data put to the image comparing process using the predetermined compare algorithm, and the arrangement areas of the reuse part objects in the raster data of each page of the manuscript data.

According to such image processing apparatus, the pages including the reuse part objects are extracted on a basis of at least one page per reuse part object from the manuscript data for variable printing. A precise print inspection (partial print inspection) is carried out by comparing the reference image data and the raster date in the areas specified as the arrangement areas of the reuse part objects on the extracted pages. Subsequently, using the raster data of the arrangement areas of the reuse part objects for which the print inspection has been done, a further print inspection (overall print inspection) is carried out concerning the reuse part object on each page of the manuscript data. Therefore, the print inspection of the reuse part objects on all pages of the manuscript data can use a high-speed compare algorithm of shorter processing time per object than when carrying out the precise print inspection, thereby to speed up a series of image processing including RIP processing and print inspecting processes of the manuscript data for variable printing. It is thus possible to perform a highly reliable digital print inspection with increased speed.

In one preferred embodiment, non-reuse part objects are subjected to a print inspection separately from the reuse part objects. Thus, a digital print inspection with increased reliability is realized while preventing increase of the time taken in print inspection.

In another aspect of the invention, there is provided an image processing method for carrying out an electronic print inspection of raster data for printing created by converting manuscript data written in a page description language. This method comprises an attribute information acquiring step for acquiring attribute information on objects constituting each page by analyzing manuscript data for variable printing; an extracting step for specifying reuse part objects reused on a plurality of pages from the attribute information on the objects acquired in the attribute information acquiring step, acquiring pages including the reuse part objects and use frequencies and arrangement information on each page of the reuse part objects, and extracting the pages including the reuse part objects on a basis of at least one page per reuse part object; a reference image data creating step for creating reference image data expressing an image state of the manuscript data; a conversion processing step for creating raster data by carrying out a conversion process of the manuscript data; an area specifying step for specifying, by using the arrangement information of the reuse part objects acquired in the extracting step, arrangement areas of the reuse part objects in the reference image data created in the reference image data creating step, and specifying arrangement areas of the reuse part objects in raster data created in the conversion processing step; a first image comparing step for carrying out an image data comparing process at least once per reuse part object, using a predetermined compare algorithm, for the arrangement areas of the reuse part objects in the reference image data specified in the area specifying step concerning the pages extracted in the extracting step, and the arrangement areas of the reuse part objects in the raster data; and a second image comparing step for carrying out an image data comparing process with respect to the plurality of pages of the manuscript data, using a high-speed compare algorithm of faster processing speed than the predetermined compare algorithm, for the arrangement areas of the reuse part objects in the raster data put to the comparing process in the first image comparing step, and the arrangement areas of the reuse part objects in the raster data of each page of the manuscript data.

In a further aspect of the invention, there is provided an image processing program executed in memory by a CPU of a computer for causing the computer to function as an image processing apparatus to carry out an electronic print inspection of raster data for printing created by converting manuscript data written in a page description language. This program comprises an attribute information acquiring step for acquiring attribute information including arrangement information on objects constituting each page by analyzing manuscript data for variable printing; an extracting step for specifying reuse part objects reused on a plurality of pages from the attribute information on the objects acquired in the attribute information acquiring step, acquiring from the manuscript data pages including the reuse part objects and use frequencies and arrangement information on each page of the reuse part objects, and extracting the pages including the reuse part objects on a basis of at least one page per reuse part object; a reference image data creating step for creating reference image data expressing an image state of the manuscript data; a conversion processing step for creating raster data by carrying out a conversion process of the manuscript data; an area specifying step for specifying, by using the arrangement information of the reuse part objects acquired in the extracting step, arrangement areas of the reuse part objects in the reference image data created in the reference image data creating step, and specifying arrangement areas of the reuse part objects in raster data created in the conversion processing step; a first image comparing step for carrying out an image comparing process at least once per reuse part object, using a predetermined compare algorithm, for the arrangement areas of the reuse part objects in the reference image data specified in the area specifying step concerning the pages extracted in the extracting step, and the arrangement areas of the reuse part objects in the raster data; and a second image comparing step for carrying out an image comparing process with respect to the plurality of pages of the manuscript data, using a high-speed compare algorithm of faster processing speed than the predetermined compare algorithm, for the arrangement areas of the reuse part objects in the raster data put to the image comparing process in the first image comparing step, and the arrangement areas of the reuse part objects in the raster data of each page of the manuscript data.

In a still further aspect of the invention, there is provided a storage medium storing an image processing program readable by a computer on a non-temporary basis, for causing the computer to function as an image processing apparatus to carry out an electronic print inspection of raster data for printing created by converting manuscript data written in a page description language. Program codes stored and readable by the computer comprise a code for acquiring attribute information including arrangement information on objects constituting each page by analyzing manuscript data for variable printing; a code for specifying reuse part objects reused on a plurality of pages from the attribute information on the objects, acquiring from the manuscript data pages including the reuse part objects and use frequencies and arrangement information on each page of the reuse part objects, and extracting the pages including the reuse part objects on a basis of at least one page per reuse part object; a code for creating reference image data expressing an image state of the manuscript data; a code for creating raster data by carrying out a conversion process of the manuscript data; a code for specifying, by using the arrangement information of the reuse part objects, arrangement areas of the reuse part objects in the reference image data, and specifying arrangement areas of the reuse part objects in raster data; a code for carrying out an first image comparing process at least once per reuse part object, using a predetermined compare algorithm, for the arrangement areas of the reuse part objects in the reference image data concerning the extracted pages extracted, and the arrangement areas of the reuse part objects in the raster data; and a code for carrying out an second image comparing process with respect to the plurality of pages of the manuscript data, using a high-speed compare algorithm of faster processing speed than the predetermined compare algorithm, for the arrangement areas of the reuse part objects in the raster data put to the first image comparing process, and the arrangement areas of the reuse part objects in the raster data of each page of the manuscript data.

Other features and advantages of the invention will be apparent from the following detailed description of the embodiments of the invention.

BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.

Fig. 1 is an overview of a printing system;
Fig. 2 is a block diagram showing a hardware configuration of a print data processing apparatus;
Fig. 3 is a block diagram showing a main functional construction of the print data processing apparatus;
Fig. 4 is an explanatory view showing an example of compare algorithm applied to a print inspection process;
Fig. 5 is a flow chart showing an image processing procedure in the print data processing apparatus;
Fig. 6 is a flow chart showing an image processing procedure in the print data processing apparatus;
Fig. 7 is a flow chart showing an image processing procedure in the print data processing apparatus; and

Fig. 8 is an explanatory view showing an outline of image processing in the print data processing apparatus.

DESCRIPTION OF THE PREFERRED EMBODIMENTS

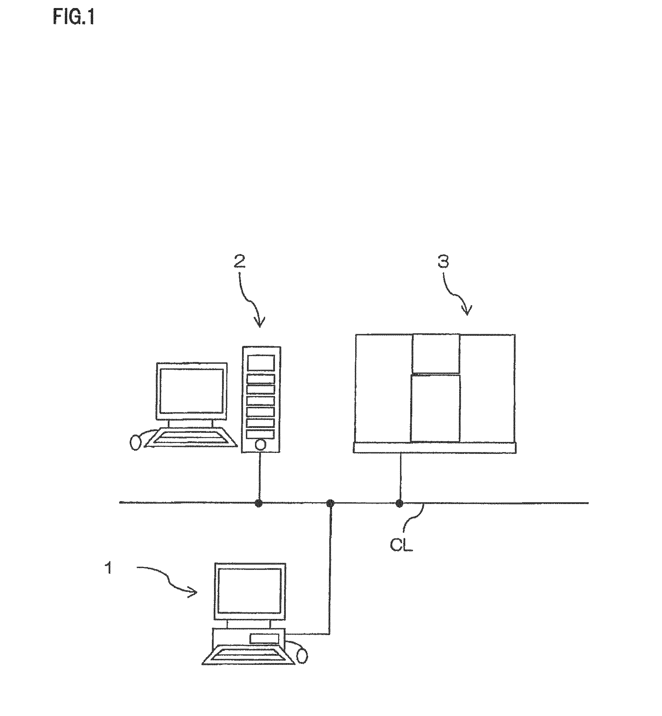

An embodiment of this invention will be described with reference to the drawings. Fig. 1 is an overview of a printing system.

This printing system includes a manuscript data creating apparatus 1 (hereinafter called "client 1") for creating manuscript data, a print data processing apparatus 2 which functions as an RIP processing apparatus for carrying out RIP processing to convert the manuscript data into raster data processable by a printing machine 3, and which functions also as an image processing apparatus of this invention for carrying out a digital print inspection through image processing of the manuscript data and raster data, and the printing machine 3 for carrying out printing based on the raster data. Client 1, print data processing apparatus 2 and printing machine 3 can transmit and receive various information to and from one another through a communication line CL connected to a network such as a LAN (Local Area Network).

Client 1 edits characters, patterns and so on which make up prints, and inputs to and gives the print data processing apparatus 2 and printing machine 3 instructions for printing the manuscript data written in a page description language such as PDF (Portable Document Format). Input devices connected to client 1, such as a keyboard and a mouse, can be used to instruct the print data processing apparatus 2 and printing machine 3 to execute or suspend RIP processing and printing.

The printing machine 3 records images by inkjet method, and forms images on a recording medium such as cut sheets or roll paper by controlling operation of a print head having numerous nozzles, based on the raster data received from the print data processing apparatus 2. The printing method of the printing machine 3 in this printing system may be an electrographic method.

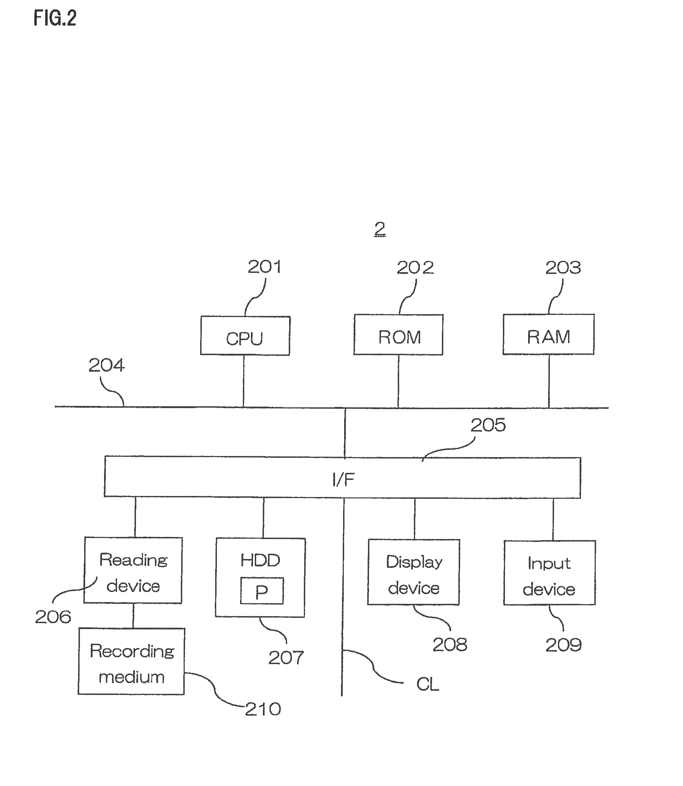

Fig. 2 is a block diagram showing a hardware configuration of the print data processing apparatus 2.

The print data processing apparatus 2 is realized by using a personal computer, which includes a CPU 201, a ROM 202, a RAM 203, an interface 205, a reading device 206 such as a disk drive for reading information from a portable recording medium 210 such as a CD-ROM, an HDD (hard disk) 207 which is a magnetic disk, a display device 208 such as a liquid crystal display, and an input device 209 such as a keyboard and a mouse. The CPU 201, ROM 202, RAM 203 and interface 205 are connected to one another through a bus 204. The reading device 206, HDD 207, display device 208, input device 209 and communication line CL are connected to the interface 205.

The print data processing apparatus 2 can communicate with the client 1 and printing machine 3 through the communication line CL connected to the interface 205. The HDD 207 stores various data and programs. When a program stored on the HDD 207 is executed, the program is loaded into the ROM 202, and its functions are realized using the RAM 203 and CPU 201. The print data processing apparatus 2 functions as an RIP processing apparatus, for example, with the CPU 201 executing an RIP processing program. The display device 208 displays various information, and the input device 209 is used for various input operations by the operator.

The image processing program of this invention may be recorded on the portable recording medium 210 such as a CD-ROM. When the image processing program of this invention is recorded on the recording medium 210, the print data processing apparatus 2 reads program P from the recording medium 210, using the reading device 206, and records the program P on the HDD 207. The print data processing apparatus 2 does not necessarily need the display device 208 or the input device 209, but may have information on execution states of a print inspection, print inspection results and so on displayed on the display device of client 1, and carry out setting operations relating to the print inspection through the input device of client 1.

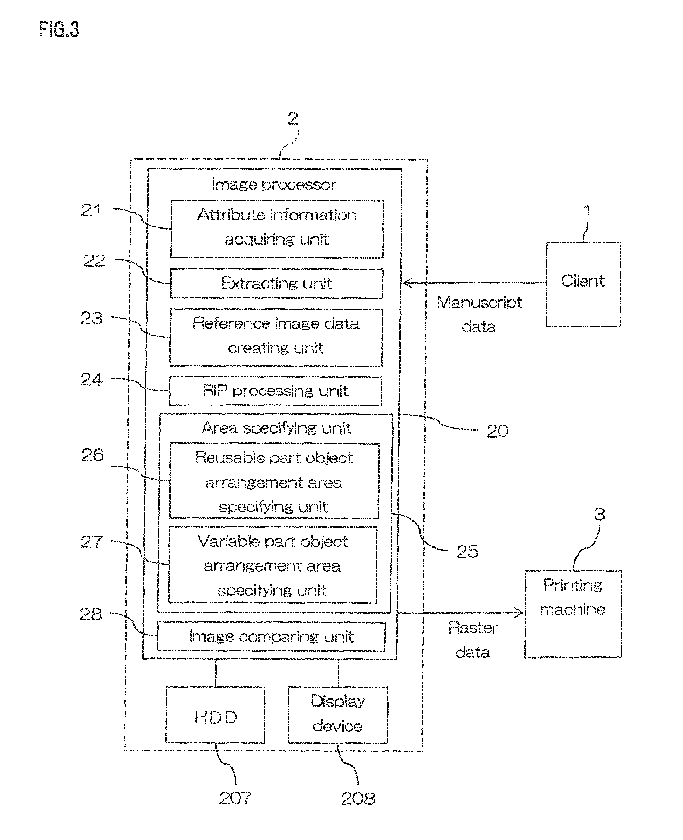

Fig. 3 is a block diagram showing a main functional construction of the print data processing apparatus 2.

The print data processing apparatus 2 includes, as components of its functional construction, an image processor 20 for performing the RIP processing of manuscript data from the client 1 and a print inspecting process to check results of the RIP processing. This image processor 20 has an attribute information acquiring unit 21 for acquiring attribute information including arrangement information of objects constituting each page of the manuscript data, an extracting unit 22 for extracting at least one page per reuse part object from among pages including reuse part objects, a reference image data creating unit 23 for creating reference image data expressing image states of the manuscript data, an RIP processing unit 24 for performing the RIP processing of the manuscript data, an area specifying unit 25 for specifying areas of image data to be compared in the print inspecting process, and an image comparing unit 28 for comparing, by using a compare algorithm, images in the areas specified by the area specifying unit 25.

The attribute information acquiring unit 21 acquires attribution information including arrangement information of objects constituting each page of the manuscript data by analyzing the manuscript data received from the client 1. When the manuscript data is in PDF (Portable Document Format), for example, information showing data structure such as layout information on the objects of each page is described in a text format in accordance with a predetermined grammar. By decoding this description, the attribute information acquiring unit 21 can identify the objects included in the manuscript data and acquire arrangement information on each object.

The extracting unit 22 determines reuse part objects reused over a plurality of pages from the information acquired by the attribute information acquiring unit 21, and creates a table describing, for example, use frequencies of the reuse part objects in the manuscript data and coordinates information on arrangement areas on each page, as correlated with the reuse part objects determined. This table is stored on the HDD 207. Reusable part objects used for the first time in this manuscript data are registered also in a part object database stored on the HDD 207. Further, the extracting unit 22 extracts at least one page per reuse part object from among the pages including the reuse part objects obtained from the analysis by the attribute information acquiring unit 21.

The reference image data creating unit 23 creates reference image data expressing image states of the manuscript data. When the manuscript data is in PDF, the reference image data creating unit 23 uses a function used in creating thumbnails in PDF, and creates reference image data corresponding to images of the respective pages of the manuscript data displayed on the display device 208 by viewer software used when browsing PDF files.

The RIP processing unit 24 has a plurality of RIP engines capable of RIP processing according to the file format and purpose of the manuscript data, and functions as a conversion processing device for converting the manuscript data written in a page description language into raster data.

The area specifying unit 25 includes a reuse part object arrangement area specifying unit 26, and an arrangement area specifying unit 27 for specifying arrangement areas of variable part objects into which variable data such as character strings and bar codes having contents different from page to page of the manuscript data is flowed. The variable part object arrangement areas are the non-reuse part object arrangement areas in this invention.

The reuse part object arrangement area specifying unit 26, before the print inspecting process by the image comparing unit 28 described hereinafter, determines reuse part object arrangement areas to be compared in the print inspection, from the reference image data and the raster data which is image data resulting from the RIP processing. The variable part object arrangement area specifying unit 27, before the print inspecting process by the image comparing unit 28 described hereinafter, determines from the raster data variable part object arrangement areas to be compared in the print inspection.

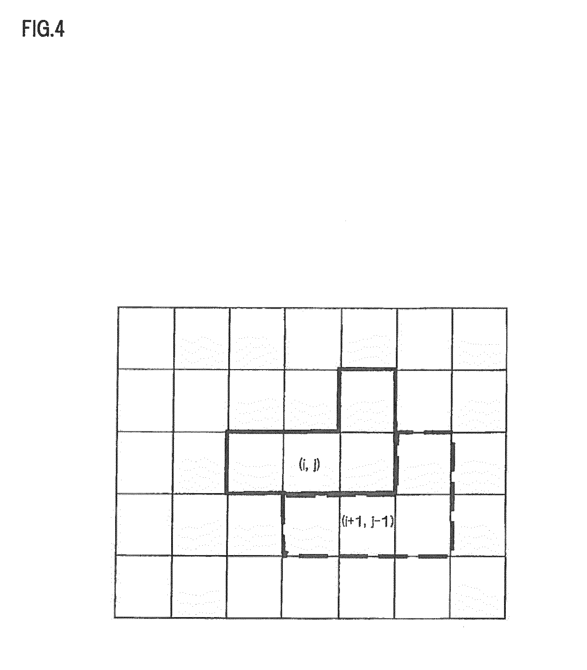

The image comparing unit 28 performs the print inspecting process using a compare algorithm appropriate to the purpose of print inspection, and comparing the image data of the areas determined by the area specifying unit 25. Fig. 4 is an explanatory view showing an example of compare algorithm used in the print inspecting process. Each of the boxes in Fig. 4 corresponds to one pixel.

A swing method is available for a preliminary print inspection described hereinafter, as a precise compare algorithm which can disregard minute differences between the image data compared. In this swing method, assuming that, for pixel (i, j) shown in Fig. 4, the tone value of image data serving a standard for comparison is $G_s$ (i, j), and the tone value of image data subjected to print inspection is $G_0$ (i, j), the pixel position is swung (shifted) by m pixels in i-direction and by n pixels in j-direction (m and n being integers) for comparison, and calculates difference value $\Delta G$ (i, j) in tone value from the following equation (1):

$$\Delta G~(i,~j) = G_0~(I - m,~j - n) - G_s~(i,~j)~~~...~(1)$$

Fig. 4 shows how each pixel in the figure shown in a solid line is shifted by m = 1 and n = -1 (to the figure shown in a broken line). In the swing method, for example, while shifting the pixel position centering on pixel (i, j) of the image data subjected to print inspection is shifted by plus and minus one at a time in the i-direction and j-direction, a comparing step for comparing the image data in each shifted position with the image data serving as the standard is repeated nine times. It is checked whether a significant difference has resulted from a plurality of difference values $\Delta G$ (i, j) obtained. Thus, the swing method carries out a comparison by causing a parallel translation of the arrangement of one of the two image data compared, to cancel pixel discords occurring between the image data and detect intrinsic difference values or the like. The predetermined compare algorithm in this invention refers to a precise compare algorithm like the swing method which can carry out print inspection precisely through a comparing step executed a plurality of times.

With the swing method, since the position change the image data to be compared and the comparing step are repeated a plurality of times, the print inspecting process per page is time-consuming. Therefore, a compare algorithm applied to a main print inspection described hereinafter, which involves a large number of pages (image data) to be inspected, checks whether the two image data are completely in agreement (whether a significant difference in tone value is found) through a single comparison which omits the operation to shift the arrangement of one of the image data compared. The compare algorithm, which can carry out print inspection at high speed with a far less number of comparing steps than the precise compare algorithm with the swing process described above, is called in this specification a high-speed compare algorithm.

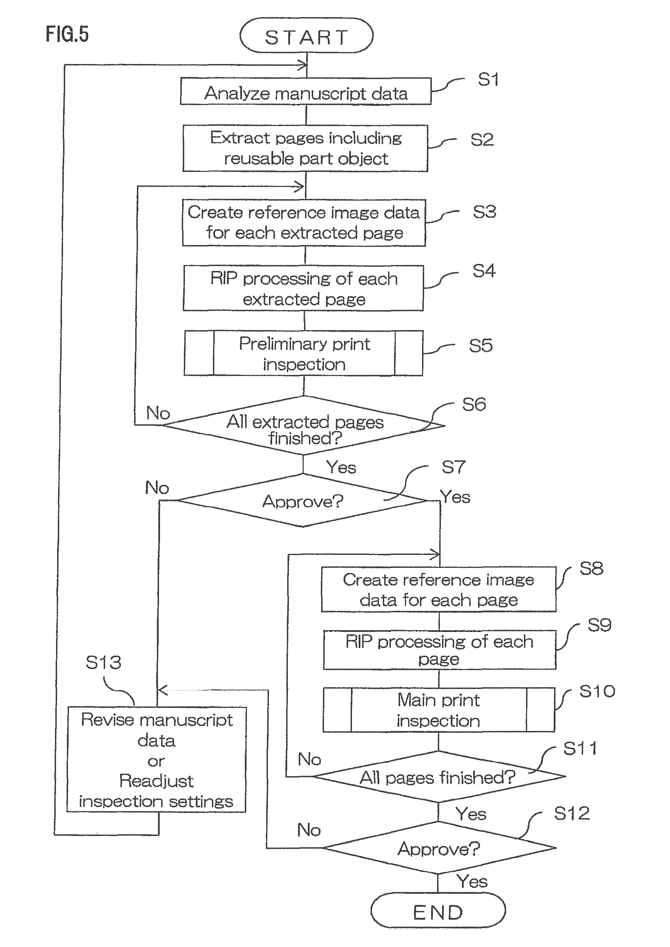

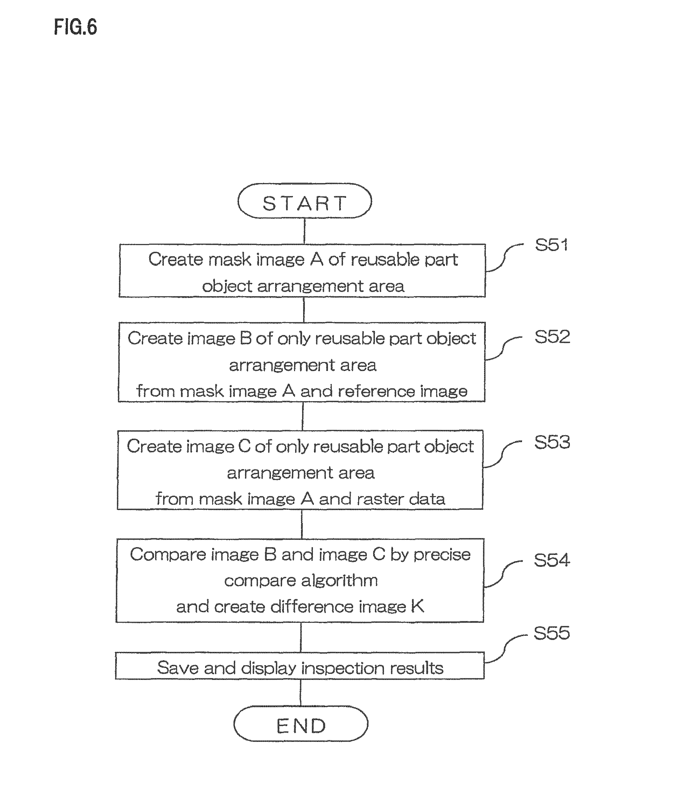

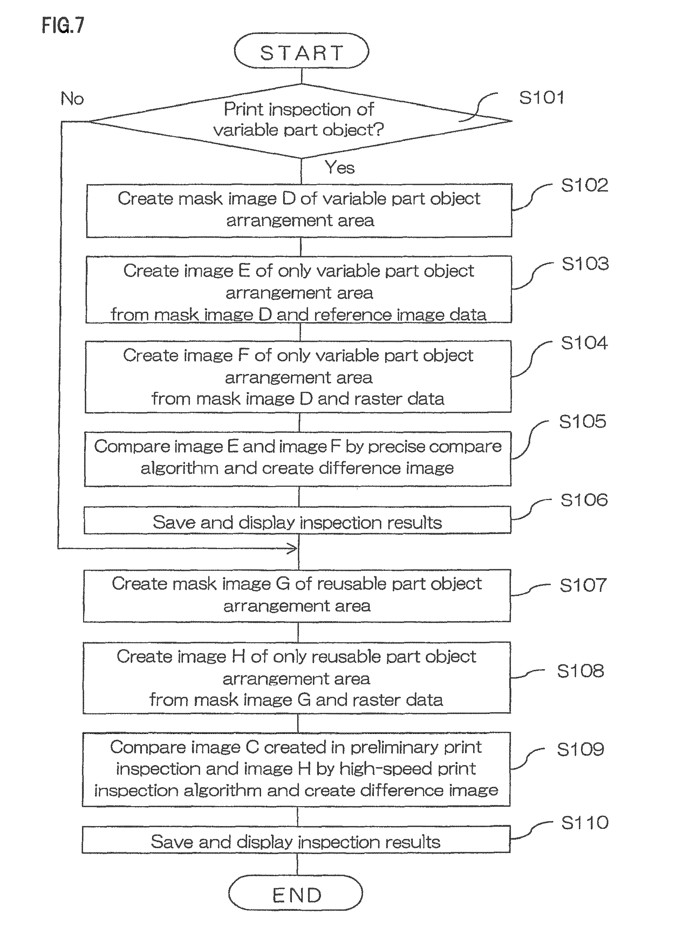

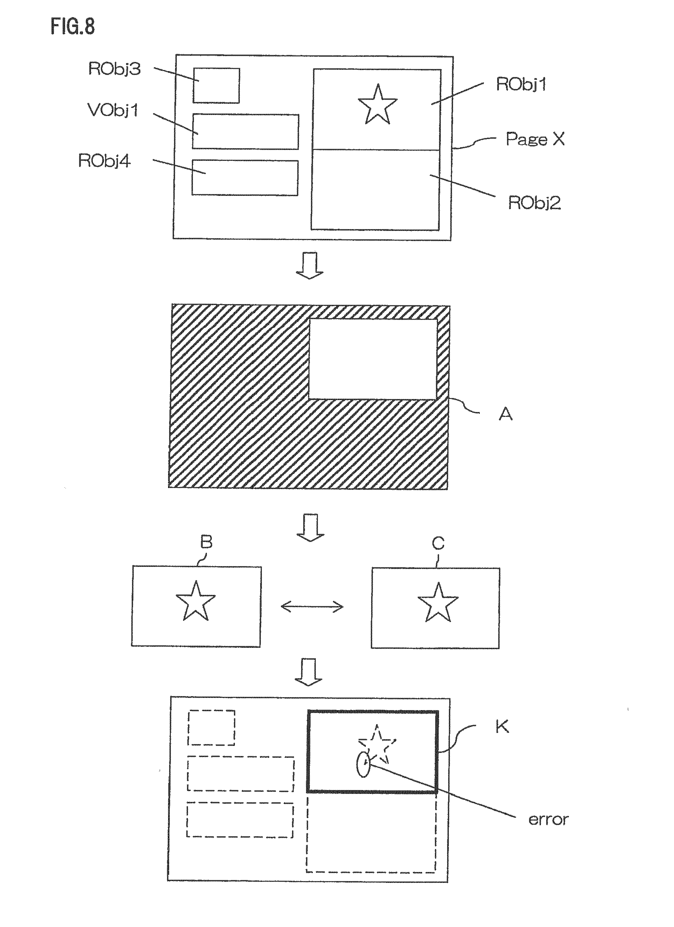

Next, an image processing method realizable by each function of the image processor 20 having the above construction will be described. Figs. 5 through 7 are flow charts showing image processing procedures in the print data processing apparatus 2. Fig. 6 shows a procedure of the preliminary print inspection shown in Fig. 5. Fig. 7 shows a procedure of the main print inspection shown in Fig. 5. Fig. 8 is an explanatory view showing an outline of the print inspecting process in the print data processing apparatus 2.

When manuscript data having a plurality of pages is inputted to the print data processing apparatus 2, an analysis of the manuscript data is performed and attribute information of objects arranged on each page is acquired (step S1).

As a result of the analysis of the manuscript data in step S1 (attribute information acquiring step), reuse part objects included in the manuscript data are specified and pages including the reuse part objects are extracted (step S2). In this step S2 (extracting step), at least one page per reuse part object is extracted. When a plurality of reuse part objects are present on one page, in the example shown in Fig. 8, for example, page X including four reuse part objects RObj1-4 and one variable part object VObj1 is extracted in this extracting step as a page including reuse part object RObj1. For the other reuse part objects RObj2-4, pages other than page X are separately extracted as pages including the respective reuse part objects RObj2-4.

After the pages including the reuse part objects are extracted, reference image data is created for each extracted page (step S3). Then, RIP processing of each page is carried out to create raster data (step S4).

A preliminary print inspection is performed (step S5) using the reference image data of the pages including the reuse part objects created in step S3 (reference image data creating step) and the raster data of the pages including the reuse part objects created in step S4 (conversion processing step).

The preliminary print inspection corresponds to the first image comparing step of this invention, and is performed according to the procedure shown in Fig. 6. First, a mask image A of a reuse part object arrangement area of each extracted page is created (step S51) using the arrangement information of the objects acquired through the attribute information acquiring step and the extracting step. As shown in Fig. 8, this mask image A enables extraction of only the reuse part object arrangement area by masking the areas other than the arrangement area of the reuse part object. This mask image A has a function to determine only one reuse part object arrangement area from the original reference image data and raster data, excluding the other portions. Instead of being limited to the mask image A shown in Fig. 8, use may be made of a clipping frame of the same size as the reuse part object arrangement area.

After the mask image A is created, an image B of only the reuse part object arrangement area is created from the mask image A and the reference image data (step S52), and an image C of only the reuse part object is created from the mask image A and the raster data (step S53). That is, the image B is reference image data of only the reuse part object arrangement area, and image C is raster data of only the reuse part object. Since each image data of the image C is used in the main print inspection described hereinafter, it is saved on the HDD 207 or in the RAM 203.

After an area specifying step is executed through steps S51 through S53 for specifying the reuse part object arrangement area from the reference image data and raster data, an image data comparing process is carried out between the image B and image C with application of the precise compare algorithm and a difference image K is created (step S54). This embodiment uses the swing method for the comparing process in the preliminary print inspection with application of the precise compare algorithm.

Print inspection results are saved on the HDD 207, and are displayed on the display device 208 as necessary, in a manner to clarify locations where errors have been detected. The print inspection results may be displayed on the display device 208 in form of a report listing pages on which errors have been detected, after the preliminary print inspection is completed for all the pages including the reuse part objects extracted in step S2.

Steps S3 through S5 (see Fig. 5) are executed repeatedly for each page including the reuse part object extracted in step S2. After the steps up to the preliminary print inspection are completed for all the pages including the reuse part objects extracted in step S2 (step S6), the print inspection results are brought up for approval (step S7). This step S7 is executed by the operator making an input to the input device 209 for transmitting an approval signal or disapproval signal in response to the print inspection results displayed on the display device 208. When approval is not given to the results of the preliminary print inspection concerning the reuse part objects, the manuscript data is revised or inspection settings are readjusted (step S13), and the process is done all over again from step S1.

In this embodiment, when the pages extracted in step S2 described above are one page per reuse part object, the preliminary print inspection of step S5 is executed once. That is, the precise print inspection is performed once per reuse part object. When the pages extracted in step S2 described above are two pages per reuse part object, it can obtain effects equivalent to the precise print inspection being performed twice per reuse part object. The operation of preliminary print inspection in step S5 may be repeated a plurality of times for the same reference image data and raster data.

When approval is given to the results of the preliminary print inspection concerning the reuse part objects, reference image data is created for each page of the manuscript data made up of a plurality of pages (step S8). Then, RIP processing of each page is performed to create raster data (step S9).

The main print inspection is performed (step S10) using the reference image data created in step S8 (reference image data creating step) and the raster data created in step S9 (conversion processing step).

The main print inspection is performed according to the procedure shown in Fig. 7. First, determination is made whether to conduct a print inspection of variable part objects (step S101). When the variable part objects are characters such as names and addresses as in direct mail prints, for example, there are few cases of error because of simplicity of description, compared with reuse parts. Therefore, this embodiment omits the print inspection concerning such variable part objects as are beforehand known to have a low frequency of error occurrence, thereby to speed up the main print inspection.

When it is determined in step S101 to conduct the print inspection of the variable part objects, a mask image D of a variable part object arrangement area is created for each page (step S102) using the arrangement information of the objects acquired in the attribute information acquiring step. This mask image D is created with the same technique as the mask image A shown in Fig. 8. That is, while the variable part object VObj1 is arranged on page X shown in Fig. 8, the mask image D enables extraction of only the variable part object arrangement area by masking the areas other than the arrangement area of the variable part object Vobj1.

After the mask image D is created, an image E of only the variable part object arrangement area is created from the mask image D and the reference image data (step S103), and an image F of only the variable part object is created from the mask image D and raster data (step S104). That is, image E is reference image data of only the variable part object arrangement area, and image F raster data of only the variable part object.

After an area specifying step is executed through steps S102 through S104 for specifying the variable part object arrangement area from the reference image data and raster data, an image data comparing process is carried out between the image E and image F with application of the precise compare algorithm and a difference image is created (step S105). In this embodiment, the comparing process in the main print inspection with application of the precise compare algorithm to the variable part objects uses the swing method which is the same as the compare algorithm applied in the preliminary print inspection. However, the compare algorithm applied to the variable part objects in the main print inspection does not need to be exactly the same as the compare algorithm applied in the preliminary print inspection, but may be a different compare algorithm providing equivalent effects.

Print inspection results are saved on the HDD 207, and are displayed on the display device 208 as necessary, in a manner to clarify locations where errors have been detected (step S106). The print inspection results may be displayed on the display device 208 in form of a report listing pages on which errors have been detected, after all the steps of the main print inspection are completed for all the pages.

Then, the main print inspection shifts to a print inspection procedure for the reuse part objects. When it is determined in step S101 that the print inspection of the variable part objects is not conducted, the above steps S102 through S106 are omitted.

First, a mask image G of a reuse part object arrangement area is created for each page (step S107) using the arrangement information of the objects acquired in the attribute information acquiring step. This mask image G is created with the same technique as the mask image A shown in Fig. 8. That is, while the reuse part objects RObj1-4 are arranged on page X shown in Fig. 8, this mask image G enables extraction of only a reuse part object arrangement area for each of the reuse part objects RObj1-4 by masking the areas other than the arrangement area of each reuse part object.

After the mask image G is created, an image H of only the reuse part object arrangement area is created from the mask image G and raster data (step S108). That is, the image H is raster data of only the reuse part object arrangement area.

After an area specifying step is executed in steps S107 and S108 for specifying the reuse part object arrangement area from the raster data, the image C created in step S53 for the preliminary print inspection and corresponding to this reuse part object is read from the HDD 207 or RAM 203. And an image data comparing process is carried out between the image C and image H with application of the high-speed compare algorithm and a difference image is created (step S109). In this embodiment, the comparing process with application of the high-speed compare algorithm to the reuse part objects in the main print inspection determines in a single comparison whether both image data are completely in agreement.

The image data which serves as standard in this comparing process using the high-speed compare algorithm is the image data of image C already having gone through the comparing process using the precise compare algorithm in the preliminary print inspection and having been approved as errorless in step S7. Therefore, the accuracy of print inspection will not lower even if the compare algorithm of few comparing steps is used when inspecting print data concerning the reuse part object on each page in the main print inspection. This enables speeding up of the print inspecting process concerning the reuse part object on each page.

The image C, which has been created from one of the plurality of pages including the same reuse part object, can be different in orientation from the image H of each page created in step S108. In such a case, the comparing process may be carried out after adjusting the image orientation, as appropriate, such as by rotating, mirror-reversing or vertically flipping the image C or the image H.

Print inspection results are saved on the HDD 207, and are displayed on the display device 208 as necessary, in a manner to clarify locations where errors have been detected (step S110). The print inspection results may be displayed on the display device 208 in form of a report listing pages on which errors have been detected, after all the steps of the main print inspection are completed for all the pages.

Of the steps of the main print inspection described above, steps S102 through S106 for inspecting print data of the variable part objects correspond to the third image comparing step of this invention, and steps S107 through S110 for inspecting print data of the reuse part objects correspond to the second image comparing step of this invention.

Steps S8 through S10 (see Fig. 5) are executed repeatedly for each page of the manuscript data made up of a plurality of pages. After the steps up to the main print inspection are completed for all the pages of the manuscript data (step S10), the print inspection results are brought up for approval (step S12). This step S12 is, as is step S7, executed by the operator making an input to the input device 209 for transmitting an approval signal or disapproval signal in response to the print inspection results displayed on the display device 208. When approval is not given to the results of the main print inspection, which is an overall print inspection concerning all the pages of the manuscript data, the manuscript data is revised or inspection settings are readjusted (step S13), and the process is done all over again from step S1.

In this embodiment, approval of the print inspection results in step S7 and step S12 is determined based on whether the approval signal is inputted by the operator. For example, approval of the print inspection results may be made based on a determination criterion such as whether the number of pages on which errors are detected is within a range not exceeding a certain percentage of the whole.

When approval is given to the results of the main print inspection, the series of image processing is completed. After the image processing is completed, the raster data is forwarded to the printing machine 3 and the printing is performed. The raster data forwarded to the printing machine 3 at this time may be the raster data created in step S9, or may be data separately created by RIP processing as raster data for printing.

The respective steps shown in the flow charts of Figs. 5, 6 and 7 described above are realized by the CPU 201 executing the image processing program of this invention.

In this embodiment, as described above, a preliminary print inspection is first carried out by extracting the pages including reuse part objects of manuscript data on the basis of at least one page per reuse part object. Since the number of pages is reduced in this way, even if the manuscript data has a huge number of pages, a precise print inspection can be performed concerning each reuse part object while preventing increase of the time taken in print inspection. Further, in this embodiment, a main print inspection following the preliminary print inspection uses raster data of only the reuse part object arrangement area which has gone through the precise inspection in the preliminary print inspection. Thus, the print inspection of the reuse part objects on all pages of the manuscript data uses a compare algorithm having a much less number of comparing steps than the precise print inspection, which realizes further improvement in the speed of the print inspecting process.

Thus, by increasing the efficiency of the print inspection of the reuse part objects reused over a plurality of pages of the manuscript data, this invention can speed up the print inspection conducted in order to check results of RIP processing of the manuscript data for variable printing.

**Claims**

1. An image processing apparatus (2) for carrying out an electronic print inspection of raster data for printing created by converting manuscript data written in a page description language, comprising:

   an attribute information acquiring device (21) for acquiring attribute information including arrangement information on objects constituting each page by analyzing manuscript data for variable printing;
   an extracting device (22) for specifying reuse part objects reused on a plurality of pages from the attribute information on the objects acquired by the attribute information acquiring device (21), acquiring from the manuscript data pages including the reuse part objects and use frequencies and arrangement information on each page of the reuse part objects, and extracting the pages including the reuse part objects on a basis of at least one page per reuse part object;
   a reference image data creating device (23) for creating reference image data expressing an image state of the manuscript data;
   a conversion processing device (24) for creating raster data by carrying out a conversion process of the manuscript data;
   an area specifying device (25) for specifying, by using the arrangement information of the reuse part objects acquired by the extracting device (22), arrangement areas of the reuse part objects in the reference image data (B) created by the reference image data creating device (23), and specifying arrangement areas of the reuse part objects in raster data (C) created by the conversion processing device (24); and
   an image comparing device (28) for carrying out an image comparing process at least once per reuse part object, using a predetermined compare algorithm, for the arrangement areas of the reuse part objects in the reference image data (B) specified by the area specifying device (25) concerning the pages extracted by the extracting device (22), and the arrangement areas of the reuse part objects in the raster data (C), and thereafter carrying out an image comparing process with respect to the plurality of pages of the manuscript data, using a high-speed compare algorithm of faster processing speed than the predetermined compare algorithm, for the arrangement areas of the reuse part objects in the raster data (C) put to the image comparing process using the predetermined compare algorithm, and the arrangement areas of the reuse part objects in the raster data (H) of each page of the manuscript data.

2. The image processing apparatus (2) according to claim 1 wherein:

the area specifying device (25) is configured for acquiring arrangement areas of non-reuse part objects by using the attribute information on the objects acquired by the attribute information acquiring device (21), specifying arrangement areas of the non-reuse part objects in the reference image data (E) created by the reference image data creating device (23), and specifying arrangement areas of the non-reuse part objects in the raster data (F) created by the conversion processing device (24); and

the image comparing device (28) is configured for carrying out an image comparing process with respect to the plurality of pages of the manuscript data, using a compare algorithm equivalent to the predetermined compare algorithm for the arrangement areas of the non-reuse part objects in the reference image data (E), and the arrangement areas of the non-reuse part objects in the raster data (F).

3. An image processing method for carrying out an electronic print inspection of raster data for printing created by converting manuscript data written in a page description language, comprising:

an attribute information acquiring step (S1) for acquiring attribute information on objects constituting each page by analyzing manuscript data for variable printing;

an extracting step (S2) for specifying reuse part objects reused on a plurality of pages from the attribute information on the objects acquired in the attribute information acquiring step (S1), acquiring pages including the reuse part objects and use frequencies and arrangement information on each page of the reuse part objects, and extracting the pages including the reuse part objects on a basis of at least one page per reuse part object;

a reference image data creating step (S3) for creating reference image data expressing an image state of the manuscript data;

a conversion processing step (S4) for creating raster data by carrying out a conversion process of the manuscript data;

an area specifying step for specifying, by using the arrangement information of the reuse part objects acquired in the extracting step (S2), arrangement areas of the reuse part objects in the reference image data (B) created (S52) in the reference image data creating step (S3), and specifying arrangement areas of the reuse part objects in raster data (C) created (S53) in the conversion processing step (S4);

a first image comparing step (S5, S54) for carrying out an image data comparing process at least once per reuse part object, using a predetermined compare algorithm, for the arrangement areas of the reuse part objects in the reference image data (B) specified in the area specifying step concerning the pages extracted in the extracting step (S2), and the arrangement areas of the reuse part objects in the raster data (C); and

a second image comparing step (S10, S107~S110) for carrying out an image data comparing process with respect to the plurality of pages of the manuscript data, using a high-speed compare algorithm of faster processing speed than the predetermined compare algorithm, for the arrangement areas of the reuse part objects in the raster data (C) put to the comparing process in the first image comparing step (S5, S54), and the arrangement areas of the reuse part objects in the raster data (H) of each page of the manuscript data.

4. The image processing method according to claim 3 wherein:

the area specifying step is executed for acquiring arrangement areas of non-reuse part objects by using the attribute information on the objects acquired in the attribute information acquiring step (S1), specifying arrangement areas of the non-reuse part objects in the reference image data (E) created (S103) in the reference image data creating step (S3), and specifying arrangement areas of the non-reuse part objects in the raster data (F) created (S104) in the conversion processing step (S4);

the method further comprising a third image comparing step (S 10, S105) for carrying out an image data comparing process with respect to the plurality of pages of the manuscript data, using a compare algorithm equivalent to the predetermined compare algorithm used in the first image comparing step (S5, S54), for the arrangement areas of the non-reuse part objects in the reference image data (E), and the arrangement areas of the non-reuse part objects in the raster data (F).

**5.** An image processing program (P) executed in memory (202, 203) by a CPU (201) of a computer for causing the computer to function as an image processing apparatus (2) to carry out an electronic print inspection of raster data for printing created by converting manuscript data written in a page description language, the program (P) comprising:

an attribute information acquiring step (S1) for acquiring attribute information including arrangement information on objects constituting each page by analyzing manuscript data for variable printing;

an extracting step (S2) for specifying reuse part objects reused on a plurality of pages from the attribute information on the objects acquired in the attribute information acquiring step, acquiring from the manuscript data pages including the reuse part objects and use frequencies and arrangement information on each page of the reuse part objects, and extracting the pages including the reuse part objects on a basis of at least one page per reuse part object;

a reference image data creating step (S3) for creating reference image data expressing an image state of the manuscript data;

a conversion processing step (S4) for creating raster data by carrying out a conversion process of the manuscript data;

an area specifying step for specifying, by using the arrangement information of the reuse part objects acquired in the extracting step (S2), arrangement areas of the reuse part objects in the reference image data (B) created (S52) in the reference image data creating step (S3), and specifying arrangement areas of the reuse part objects in raster data (C) created (S53) in the conversion processing step (S4);

a first image comparing step (S5, S54) for carrying out an image comparing process at least once per reuse part object, using a predetermined compare algorithm, for the arrangement areas of the reuse part objects in the reference image data (B) specified in the area specifying step concerning the pages extracted in the extracting step (S2), and the arrangement areas of the reuse part objects in the raster data (C); and

a second image comparing step (S10, S107~S110) for carrying out an image comparing process with respect to the plurality of pages of the manuscript data, using a high-speed compare algorithm of faster processing speed than the predetermined compare algorithm, for the arrangement areas of the reuse part objects in the raster data (C) put to the image comparing process in the first image comparing step (S5, S54), and the arrangement areas of the reuse part objects in the raster data (H) of each page of the manuscript data.

**6.** A storage medium (210) storing an image processing program (P) readable by a computer on a non-temporary basis, for causing the computer to function as an image processing apparatus (2) to carry out an electronic print inspection of raster data for printing created by converting manuscript data written in a page description language, program codes stored and readable by the computer comprising:

a code for acquiring attribute information including arrangement information on objects constituting each page by analyzing manuscript data for variable printing;

a code for specifying reuse part objects reused on a plurality of pages from the attribute information on the objects, acquiring from the manuscript data pages including the reuse part objects and use frequencies and arrangement information on each page of the reuse part objects, and extracting the pages including the reuse part objects on a basis of at least one page per reuse part object;

a code for creating reference image data expressing an image state of the manuscript data;

a code for creating raster data by carrying out a conversion process of the manuscript data;

a code for specifying, by using the arrangement information of the reuse part objects, arrangement areas of the reuse part objects in the reference image data, and specifying arrangement areas of the reuse part objects in raster data;

a code for carrying out an first image comparing process at least once per reuse part object, using a predetermined compare algorithm, for the arrangement areas of the reuse part objects in the reference image data (B) concerning the extracted pages, and the arrangement areas of the reuse part objects in the raster data (C); and

a code for carrying out an second image comparing process with respect to the plurality of pages of the manuscript data, using a high-speed compare algorithm of faster processing speed than the predetermined compare algorithm, for the arrangement areas of the reuse part objects in the raster data (C) put to the first image comparing process, and the arrangement areas of the reuse part objects in the raster data (H) of each page of the manuscript data.

**EP 2 763 027 B1**

**Patentansprüche**

1. Bildverarbeitungsvorrichtung (2) zum Durchführen einer elektronischen Druckinspektion von für das Drucken vorgesehenen Rasterdaten, die durch Konvertieren von Druckvorlagedaten, die in einer Seitenbeschreibungssprache abgefasst sind, erzeugt werden, wobei die Bildverarbeitungsvorrichtung (2) aufweist:

   eine Merkmalinformationserfassungseinrichtung (21) zum Erfassen von Merkmalinformationen, die Anordnungsinformationen über Objekte, die die jeweilige Seite bilden, enthaften, durch Analysieren von Druckvorlagedaten für variables Drucken;
   eine Extraktionseinrichtung (22) zum Spezifizieren von Wiederverwendungsteilobjekten, die an einer Vielzahl von Seiten wieder verwendet werden, aus den durch die Merkmalinformationserfassungseinrichtung (21) erfassten Merkmalinformationen über die Objekte, zum Erfassen, aus den Druckvorlagedaten, von Seiten, die die Wiederverwendungsteilobjekte enthalten, und von Nutzungshäufigkeits- und Anordnungsinformationen über jede Seite der Wiederverwendungsteilobjekte, und zum Extrahieren der Seiten, die die Wiederverwendungsteilobjekte enthalten, auf der Grundlage von mindestens einer Seite pro Wiederverwendungsteilobjekt;
   eine Referenzbilddatenerzeugungseinrichtung (23) zum Erzeugen von Referenzbilddaten, die einen Bildzustand der Druckvorlagedaten wiedergeben;
   eine Konvertierungsverarbeitungseinrichtung (24) zum Erzeugen von Rasterdaten durch Durchführen einer Konvertierungsverarbeitung an den Druckvorlagedaten;
   eine Bereichsspezifizierungseinrichtung (25) zum Spezifizieren, durch Verwendung der Anordnungsinformationen der Wiederverwendungsteilobjekte, von Anordnungsbereichen der Wiederverwendungsteilobjekte in den durch die Referenzbilddatenerzeugungseinrichtung (23) erzeugten Referenzbilddaten (B), und zum Spezifizieren von Anordnungsbereichen der Wiederverwendungsteilobjekte in durch die Konvertierungsverarbeitungseinrichtung (24) erzeugten Rasterdaten (C); und
   eine Bildvergleichseinrichtung (28) zum Durchführen, zumindest einmal pro Wiederverwendungsteilobjekt, einer Bildvergleichsverarbeitung unter Verwendung eines vorbestimmten Vergleichsalgorithmus in Bezug auf die Anordnungsbereiche der Wiederverwendungsteilobjekte in den Referenzbilddaten (B), die durch die Bereichsspezifizierungseinrichtung (25) in betreffend die durch die Extraktionseinrichtung (22) erfassten Seiten spezifiziert werden, und in Bezug auf die Anordnungsbereiche der Wiederverwendungsteilobjekte in den Rasterdaten (C), und zum anschließenden Durchführen einer Bildvergleichsverarbeitung hinsichtlich der Vielzahl von Seiten der Druckvorlagedaten unter Verwendung eines Hochgeschwindigkeitsvergleichsalgorithmus mit höherer Verarbeitungsgeschwindigkeit als die des vorbestimmten Vergleichsalgorithmus in Bezug auf die Anordnungsbereiche der Wiederverwendungsteilobjekte in den Rasterdaten (C), die der Bildvergleichsverarbeitung unter Verwendung des vorbestimmten Vergleichsalgorithmus zugeordnet werden, und in Bezug auf die Anordnungsbereiche der Wiederverwendungsteilobjekte in den Rasterdaten (H) von jeder Seite der Druckvorlagedaten.

2. Bildverarbeitungsvorrichtung (2) gemäß Anspruch 1, wobei:

   die Bereichsspezifizierungseinrichtung (25) eingerichtet ist, Nordnungsbereiche von Nicht-Wiederverwendungsteilobjekten durch Verwendung der durch die Merkmalinformationserfassungseinrichtung (21) erfassten Merkmalinformationen über die Objekte zu erfassen, Anordnungsbereiche der Nicht-Wiederverwendungsteilobjekte in den durch die Referenzbilddatenerzeugungseinrichtung (23) erzeugten Referenzbüddaten (E) zu spezifizieren, und Anordnungsbereiche der Nicht-Wiederverwendungsteilobjekte in den durch die Konvertierungsverarbeitungseinrichtung (24) erzeugten Rasterdaten (F) zu spezifizieren; und
   wobei die Bildvergleichseinrichtung (28) eingerichtet ist, eine Bildvergleichsverarbeitung in Bezug auf die Vielzahl von Seiten der Druckvorlagedaten unter Verwendung eines Vergleichsalgorithmus, der dem vorbestimmten Vergfeichsalgorifihmus äquivalent ist, in Bezug auf die Anordnungsbereiche der Nicht-Wiederverwendungsteilobjekte in den Referenzbilddaten (E) und in Bezug auf die Anordnungsbereiche der Nicht-Wiederverwendungsteilobjekte in den Rasterdaten (F) durchzuführen.

3. Bildverarbeitungsverfahren zum Durchführen einer elektronischen Druckinspektion von für das Drucken vorgesehenen Rasterdaten, die durch Konvertieren von Druckvorlagedaten, die in einer Seitenbeschreibungssprache abgefasst sind, erzeugt werden, wobei das Verfahren die folgenden Schritte aufweist:

   einen Merkmalinformationserfassungsschritt (S2) zum Erfassen von Merkrnafinformationen über Objekte, die eine jeweilige Seite bilden, durch Analysieren von Druckvorlagedaten für variables Drucken;
   einen Extraktionsschritt (S2) zum Spezifizieren von Wiederverwendungsteilobjekten, die an einer Vielzahl von Seiten wieder verwendet werden, aus den durch den Merkmalinformationserfassungsschritt (S1) erfassten Merkmalinformationen über die Objekte, zum Erfassen, aus den Druckvorlagedaten, von Seiten, die die Wiederverwendungsteilobjekte enthalten, und von Nutzungshäufigkeits- und Anordnungsinformationen über jede Seite der Wiederverwendungsteilobjekte, und zum Extrahieren der Seiten, die die Wiederverwendungsteilobjekte enthalten, auf der Grundlage von mindestens einer Seite pro Wiederverwendungsteifobjekt;
einen Referenzbilddatenerzeugungsschritt (S3) zum Erzeugen von Referenzbilddaten, die einen Bildzustand der Druckvorlagedaten wiedergeben;
einen Konvertierungsverarbeitungsschritt (S4) zum Erzeugen von Rasterdaten durch Durchführen einer Konvertierungsverarbeitung an den Druckvorlagedaten;
einen Bereichsspezifizierungsschritt zum Spezifizieren, durch Verwendung der Anordnungsinformationen der Wiederverwendungsteifobjekte, die in dem Extraktionsschritt (S2) erfasst werden, von Anordnungsbereichen der Wiederverwendungsteilobjekte in den durch den Referenzbilddatenerzeugungsschritt (S3) erzeugten (S52) Referenzbilddaten (B), und zum Spezifizieren von Anordnungsbereichen der Wiederverwendungsteilobjekte in durch den Konvertierungsverarbeitungsschritt (S4) erzeugten (S53) Rasterdaten (C); und
einen ersten Bildvergleichsschritt (S5, S54) zum Durchführen, zumindest einmal pro Wiederverwendungsteilobjekt, einer Bildvergleichsverarbeitung unter Verwendung eines vorbestimmten Vergleichsalgorithmus in Bezug auf die Anordnungsbereiche der Wiederverwendungsteilobjekte in den Referenzbilddaten (B), die durch den Bereichsspezifizierungsschritt betreffend die durch den Extraktionsschritt (S2) erfassten Seiten spezifiziert werden, und in Bezug auf die Anordnungsbereiche der Wiederverwendungsteilobjekte in den Rasterdaten (C), und
einen zweiten Bildvergleichsschritt (S10, S107-S110) zum Durchführen einer Bildvergleichsverarbeitung hinsichtlich der Vielzahl von Seiten der Druckvorlagedaten unter Verwendung eines Hochgeschwindigkeitsvergleichsafgorithrnus mit höherer Verarbeitungsgeschwindigkeit als die des vorbestimmten Vergieichsalgorithrnus in Bezug auf die Anordnungsbereiche der Wiederverwendungsteilobjekte in den Rasterdaten (C), die der Vergleichsverarbeitung in dem ersten Bildvergleichsschritt (S5, S54) zugeordnet werden, und in Bezug auf die Anordnungsbereiche der Wiederverwendungsteilobjekte in den Rasterdaten (H) von jeder Seite der Druckvorlagedaten.

4.  Bildbearbeitungsverfahren gemäß Anspruch 3 wobei:

    der Bereichsspezifizierungsschritt zur Erfassung von Anordnungsbereichen von Nicht-Wiederverwendungsteilobjekten durch Verwendung der durch den Merkmalinformationserfassungsschritt (S1) erfassten Merkmalinformationen über die Objekte, zur Spezifizierung von Anordnungsbereichen der Nicht-Wiederverwendungsteilobjekte in den durch den Referenzbilddatenerzeugungsschritt (S3) erzeugten (S103) Referenzbilddaten (E), und zur Spezifizierung von Anordnungsbereichen der Nicht-Wiederverwendungsteilobjekte in den durch den Konvertierungsverarbeitungsschritt (S4) erzeugten (S104) Rasterdaten (F) durchgeführt wird;
    wobei das Verfahren weiterhin aufweist
    einen dritten Bildvergleichsschritt (S10, S105) zum Durchführen einer Bildvergleichsverarbeitung hinsichtlich der Vielzahl von Seiten der Druckvorlagedaten unter Verwendung eines Vergleichsalgorithmus, der dem vorbestimmten Vergleichsalgorithmus, der bei dem ersten Bildvergleichsschritt (S5, S54) verwendet wird, äquivalent ist, in Bezug auf die Anordnungsbereiche der Nicht-Wiederverwendungsteilobjekte in den Referenzbilddaten (E) und in Bezug auf die Anordnungsbereiche der Nicht-Wiederverwendungsteilobjekte in den Rasterdaten (F).

5.  Bildverarbeitungsprogramm (P), das in einem Speicher (202, 203) durch eine CPU (201) eines Computers ausgeführt wird, um den Computer dazu zu veranlassen, als eine Bildverarbeitungsvorrichtung (2) zu fungieren, um eine elektronische Druckinspektion von für das Drucken vorgesehenen Rasterdaten, die durch Konvertieren von Druckvorlagedaten, die in einer Seitenbeschreibungssprache abgefasst sind, erzeugt werden, durchzuführen, wobei das Programm aufweist:

    einen Merkmalinformationserfiassungsschritt (S1) zum Erfassen von Merkmalinformationen über Objekte, die eine jeweilige Seite bilden, durch Analysieren von Druckvorlagedaten für variables Drucken;
    einen Extraktionsschritt (S2) zum Spezifizieren von Wiederverwendungsteilobjekten, die an einer Vielzahl von Seiten wieder verwendet werden, aus den durch den Merkmalinformationserfassungsschritt (S1) erfassten Merkmalinformationen über die Objekte, zum Erfassen, aus den Druckvorlagedaten, von Seiten, die die Wiederverwendungsteilobjekte enthalten, und von Nutzungshäufigkeits- und Anordnungsinformationen über jede Seite der Wiederverwendungsteilobjekte, und zum Extrahieren der Seiten, die die Wiederverwendungsteilobjekte enthalten, auf der Grundlage von mindestens einer Seite pro Wiederverwendungsteilobjekt;
    einen Referenzbilddatenerzeugungsschritt (S3) zum Erzeugen von Referenzbilddaten, die einen Bildzustand der Druckvorlagedaten wiedergeben;

einen Konvertierungsverarbeitungsschritt (S4) zum Erzeugen von Rasterdaten durch Durchführen einer Konvertierungsverarbeitung an den Druckvorlagedaten;

einen Bereichsspezifizierungsschritt zum Spezifizieren, durch Verwendung der Anordnungsinformationen der Wiederverwendungsteilobjekte, die in dem Extraktionsschritt (S2) erfasst werden, von Anordnungsbereichen der Wiederverwendungsteilobjekte in den durch den Referenzbilddatenerzeugungsschritt (S3) erzeugten (S52) Referenzbilddaten (B), und zum Spezifizieren von Anordnungsbereichen der Wiederverwendungsteilobjekte in durch den Konvertierungsverarbeitungsschritt (S4) erzeugten (S53) Rasterdaten (C); und

einen ersten Bildvergleichsschritt (S5, S54) zum Durchführen, zumindest einmal pro Wiederverwendungsteilobjekt, einer Bildvergleichsverarbeitung unter Verwendung eines vorbestimmten Vergleichsalgorithmus in Bezug auf die Anordnungsbereiche der Wiederverwendungsteilobjekte in den Referenzbilddaten (B), die durch den Bereichsspezifizierungsschritt betreffend die durch den Extraktionsschritt (S2) erfassten Seiten spezifiziert werden, und in Bezug auf die Anordnungsbereiche der Wiederverwendungsteilobjekte in den Rasterdaten (C), und

einen zweiten Bildvergleichsschritt (S10, S107-S110) zum Durchführen einer Bildvergleichsverarbeitung hinsichtlich der Vielzahl von Seiten der Druckvorlagedaten unter Verwendung eines Hochgeschwindigkeitsvergleichsalgorithmus mit höherer Verarbeitungsgeschwindigkeit als die des vorbestimmten Vergleichsalgorithmus in Bezug auf die Anordnungsbereiche der Wiederverwendungsteilobjekte in den Rasterdaten (C), die der Vergleichsverarbeitung in dem ersten Bildvergleichsschritt (S5, S54) zugeordnet werden, und in Bezug auf die Anordnungsbereiche der Wiederverwendungsteilobjekte in den Rasterdaten (H) von jeder Seite der Druckvorlagedaten.

6. Datenträger (210) zum dauerhaften Speichern eines durch einen Computer lesbaren Bildverarbeitungsprogramms (P), das den Computer dazu veranlasst, als eine Bildverarbeitungsvorrichtung (2) zu fungieren, um eine elektronische Druckinspektion von für das Drucken vorgesehenen Rasterdaten, die durch Konvertieren von Druckvorlagedaten, die in einer Seitenbeschreibungssprache abgefasst sind, erzeugt werden, durchzuführen, wobei der Programmcode, der gespeichert ist und durch den Computer lesbar ist, aufweist:

einen Code zum zum Erfassen von Merkmalinformationen über Objekte, die eine jeweilige Seite bilden, durch Analysieren von Druckvorfagedaten für variables Drucken;

einen Code zum Spezifizieren von Wiederverwendungsteilobjekten, die an einer Vielzahl von Seiten wieder verwendet werden, aus den Merkmalinformationen über die Objekte, zum Erfassen, aus den Druckvorlagedaten, von Seiten, die die Wiederverwendungsteilobjekte enthalten, und von Nutzungshäufigkeits- und Anordnungsinformationen über jede Seite der Wiederverwendungsteilobjekte, und zum Extrahieren der Seiten, die die Wiederverwendungsteilobjekte enthalten, auf der Grundlage von mindestens einer Seite pro Wiederverwendungsteilobjekt;

einen Code zum Erzeugen von Referenzbilddaten, die einen Bildzustand der Druckvorlagedaten wiedergeben;

einen Code zum Erzeugen von Rasterdaten durch Durchführen einer Konvertierungsverarbeitung an den Druckvorlagedaten;

einen Code zum Spezifizieren, durch Verwendung der Anordnungsinformationen der Wiederverwendungsteilobjekte, von Anordnungsbereichen der Wiederverwendungsteilobjekte in den Referenzbilddaten, und zum Spezifizieren von Anordnungsbereichen der Wiederverwendungsteilobjekte in Rasterdaten;

einen Code zum Durchführen, zumindest einmal pro Wiederverwendungsteilobjekt, einer ersten Bildvergleichsverarbeitung unter Verwendung eines vorbestimmten Vergleichsalgorithmus in Bezug auf die Anordnungsbereiche der Wiederverwendungsteilobjekte in den Referenzbilddaten (B) betreffend die extrahierten Seiten und in Bezug auf die Anordnungsbereiche der Wiederverwendungsteilobjekte in den Rasterdaten (C), und

einen Code zum Durchführen einer zweiten Bildvergleichsverarbeitung hinsichtlich der Vielzahl von Seiten der Druckvorlagedaten unter Verwendung eines Hochgeschwindigkeitsvergleichsalgorithmus mit höherer Verarbeitungsgeschwindigkeit als die des vorbestimmten Vergleichsalgorithmus in Bezug auf die Anordnungsbereiche der Wiederverwendungsteilobjekte in den Rasterdaten (C), die der ersten Vergleichsverarbeitung zugeordnet werden, und in Bezug auf die Anordnungsbereiche der Wiederverwendungsteilobjekte in den Rasterdaten (H) von jeder Seite der Druckvorlagedaten.

## Revendications

1. Appareil de traitement d'image (2) pour effectuer une inspection d'impression électronique de données de trame pour impression créée en convertissant des données manuscrites écrites dans un langage de description de page, comprenant :

un dispositif d'acquisition d'informations d'attribut (21) pour acquérir des informations d'attribut incluant des informations d'agencement sur des objets constituant chaque page en analysant des données manuscrites pour impression variable ;

un dispositif d'extraction (22) pour spécifier des objets de partie de réutilisation réutilisés sur une pluralité de pages à partir des informations d'attribut sur les objets acquises par le dispositif d'acquisition d'informations d'attribut (21), acquérir à partir des données manuscrites des pages incluant les objets de partie de réutilisation et des fréquences d'utilisation et des informations d'agencement sur chaque page des objets de partie de réutilisation, et extraire les pages incluant les objets de partie de réutilisation sur une base d'au moins une page par objet de partie de réutilisation ;

un dispositif de création de données d'image de référence (23) pour créer des données d'image de référence exprimant un état d'image des données manuscrites ;

un dispositif de traitement de conversion (24) pour créer des données de trame en effectuant un processus de conversion des données manuscrites ;

un dispositif de spécification de zone (25) pour spécifier, en utilisant les informations d'agencement des objets de partie de réutilisation acquises par le dispositif d'extraction (22), des zones d'agencement des objets de partie de réutilisation dans les données d'image de référence (B) créées par le dispositif de création de données d'image de référence (23), et spécifier des zones d'agencement des objets de partie de réutilisation dans des données de trame (C) créées par le dispositif de traitement de conversion (24) ; et

un dispositif de comparaison d'image (28) pour effectuer un processus de comparaison d'image au moins une fois par objet de partie de réutilisation, en utilisant un algorithme de comparaison prédéterminé, pour les zones d'agencement des objets de partie de réutilisation dans les données d'image de référence (B) spécifiées par le dispositif de spécification de zone (25) concernant les pages extraites par le dispositif d'extraction (22), et les zones d'agencement des objets de partie de réutilisation dans les données de trame (C), et effectuer par la suite un processus de comparaison d'image par rapport à la pluralité de pages des données manuscrites, en utilisant un algorithme de comparaison à grande vitesse de vitesse de traitement plus rapide que l'algorithme de comparaison prédéterminé, pour les zones d'agencement des objets de partie de réutilisation dans les données de trame (C) mises au processus de comparaison d'image en utilisant l'algorithme de comparaison prédéterminé, et les zones d'agencement des objets de partie de réutilisation dans les données de trame (H) de chaque page des données manuscrites.

2. Appareil de traitement d'image (2) selon la revendication 1, dans lequel :

le dispositif de spécification de zone (25) est configuré pour acquérir des zones d'agencement d'objets de partie de non-réutilisation en utilisant les informations d'attributs sur les objets acquises par le dispositif d'acquisition d'informations d'attribut (21), spécifier des zones d'agencement des objets de partie de non-réutilisation dans les données d'image de référence (E) créées par le dispositif de création de données d'image de référence (23), et spécifier des zones d'agencement des objets de partie de non-réutilisation dans les données de trame (F) créées par le dispositif de traitement de conversion (24) ; et

le dispositif de comparaison d'image (28) est configuré pour effectuer un processus de comparaison d'image par rapport à la pluralité de pages des données manuscrites, en utilisant un algorithme de comparaison équivalent à l'algorithme de comparaison prédéterminé pour les zones d'agencement des objets de partie de non-réutilisation dans les données d'image de référence (E), et les zones d'agencement des objets de partie de non-réutilisation dans les données de trame (F).

3. Procédé de traitement d'image pour effectuer une inspection d'impression électronique de données de trame pour impression créée en convertissant des données manuscrites écrites dans un langage de description de page, comprenant :

une étape d'acquisition d'informations d'attribut (S1) pour acquérir des informations d'attribut sur des objets constituant chaque page en analysant des données manuscrites pour impression variable ;

une étape d'extraction (S2) pour spécifier des objets de partie de réutilisation réutilisés sur une pluralité de pages à partir des informations d'attribut sur les objets acquises à l'étape d'acquisition d'informations d'attribut (S1), acquérir des pages incluant les objets de partie de réutilisation et des fréquences d'utilisation et des informations d'agencement sur chaque page des objets de partie de réutilisation, et extraire les pages incluant les objets de partie de réutilisation sur une base d'au moins une page par objet de partie de réutilisation ;

une étape de création de données d'image de référence (S3) pour créer des données d'image de référence exprimant un état d'image des données manuscrites ;

une étape de traitement de conversion (S4) pour créer des données de trame en effectuant un processus de conversion des données manuscrites ;

une étape de spécification de zone pour spécifier, en utilisant les informations d'agencement des objets de partie de réutilisation acquises à l'étape d'extraction (S2), des zones d'agencement des objets de partie de réutilisation dans les données d'image de référence (B) créées (S52) à l'étape de création de données d'image de référence (S3), et spécifier des zones d'agencement des objets de partie de réutilisation dans des données de trame (C) créées (S53) à l'étape de traitement de conversion (S4) ;

une première étape de comparaison d'image (S5, S54) pour effectuer un processus de comparaison de données d'image au moins une fois par objet de partie de réutilisation, en utilisant un algorithme de comparaison prédéterminé, pour les zones d'agencement des objets de partie de réutilisation dans les données d'image de référence (B) spécifiées à l'étape de spécification de zone concernant les pages extraites à l'étape d'extraction (S2), et les zones d'agencement des objets de partie de réutilisation dans les données de trame (C) ; et

une deuxième étape de comparaison d'image (S10, S107~S110) pour effectuer un processus de comparaison de données d'image par rapport à la pluralité de pages des données manuscrites, en utilisant un algorithme de comparaison à grande vitesse de vitesse de traitement plus rapide que l'algorithme de comparaison prédéterminé, pour les zones d'agencement des objets de partie de réutilisation dans les données de trame (C) mises au processus de comparaison à la première étape de comparaison d'image (S5, S54), et les zones d'agencement des objets de partie de réutilisation dans les données de trame (H) de chaque page des données manuscrites.

**4.** Procédé de traitement d'image selon la revendication 3, dans lequel ;

l'étape de spécification de zone est exécutée pour acquérir des zones d'agencement d'objets de partie de non-réutilisation en utilisant les informations d'attributs sur les objets acquises à l'étape d'acquisition d'informations d'attribut (S1), spécifier des zones d'agencement des objets de partie de non-réutilisation dans les données d'image de référence (E) créées (S103) à l'étape de création de données d'image de référence (S3), et spécifier des zones d'agencement des objets de partie de non-réutilisation dans les données de trame (F) créées (S104) à l'étape de traitement de conversion (S4) ;

le procédé comprenant en outre une troisième étape de comparaison d'image (S10, S105) pour effectuer un processus de comparaison de données d'image par rapport à la pluralité de pages des données manuscrites, en utilisant un algorithme de comparaison équivalent à l'algorithme de comparaison prédéterminé utilisé à la première étape de comparaison d'image (S5, S54), pour les zones d'agencement des objets de partie de non-réutilisation dans les données d'image de référence (E), et les zones d'agencement des objets de partie de non-réutilisation dans les données de trame (F).

**5.** Programme de traitement d'image (P) exécuté en mémoire (202, 203) par une CPU (201) d'un ordinateur pour amener l'ordinateur à fonctionner comme un appareil de traitement d'image (2) pour effectuer une inspection d'impression électronique de données de trame pour impression créée en convertissant des données manuscrites écrites dans un langage de description de page, le programme (P) comprenant :

une étape d'acquisition d'informations d'attribut (S1) pour acquérir des informations d'attribut incluant des informations d'agencement sur des objets constituant chaque page en analysant des données manuscrites pour impression variable ;

une étape d'extraction (S2) pour spécifier des objets de partie de réutilisation réutilisés sur une pluralité de pages à partir des informations d'attribut sur les objets acquises à l'étape d'acquisition d'informations d'attribut, acquérir à partir des données manuscrites des pages incluant les objets de partie de réutilisation et des fréquences d'utilisation et des informations d'agencement sur chaque page des objets de partie de réutilisation, et extraire les pages incluant les objets de partie de réutilisation sur une base d'au moins une page par objet de partie de réutilisation ;

une étape de création de données d'image de référence (S3) pour créer des données d'image de référence exprimant un état d'image des données manuscrites ;

une étape de traitement de conversion (S4) pour créer des données de trame en effectuant un processus de conversion des données manuscrites ;

une étape de spécification de zone pour spécifier, en utilisant les informations d'agencement des objets de partie de réutilisation acquises à l'étape d'extraction (S2), des zones d'agencement des objets de partie de réutilisation dans les données d'image de référence (B) créées (S52) à l'étape de création de données d'image de référence (S3), et spécifier des zones d'agencement des objets de partie de réutilisation dans des données de trame (C) créées (S53) à l'étape de traitement de conversion (S4) ;

une première étape de comparaison d'image (S5, S54) pour effectuer un processus de comparaison de données d'image au moins une fois par objet de partie de réutilisation, en utilisant un algorithme de comparaison prédéterminé, pour les zones d'agencement des objets de partie de réutilisation dans les données d'image de référence (B) spécifiées à l'étape de spécification de zone concernant les pages extraites à l'étape d'extraction (S2), et les zones d'agencement des objets de partie de réutilisation dans les données de trame (C) ; et

une deuxième étape de comparaison d'image (S10, S107~S110) pour effectuer un processus de comparaison d'image par rapport à la pluralité de pages des données manuscrites, en utilisant un algorithme de comparaison à grande vitesse de vitesse de traitement plus rapide que l'algorithme de comparaison prédéterminé, pour les zones d'agencement des objets de partie de réutilisation dans les données de trame (C) mises au processus de comparaison d'image à la première étape de comparaison d'image (S5, S54), et les zones d'agencement des objets de partie de réutilisation dans les données de trame (H) de chaque page des données manuscrites.

6. Support de stockage (210) stockant un programme de traitement d'image (P) lisible par un ordinateur sur une base non temporaire, pour amener l'ordinateur à fonctionner comme un appareil de traitement d'image (2) pour effectuer une inspection d'impression électronique de données de trame pour impression créée en convertissant des données manuscrites écrites dans un langage de description de page, des codes de programme stockés et lisibles par l'ordinateur comprenant :

un code pour acquérir des informations d'attribut incluant des informations d'agencement sur des objets constituant chaque page en analysant des données manuscrites pour impression variable ;

un code pour spécifier des objets de partie de réutilisation réutilisés sur une pluralité de pages à partir des informations d'attribut sur les objets, acquérir à partir des données manuscrites des pages incluant les objets de partie de réutilisation et des fréquences d'utilisation et des informations d'agencement sur chaque page des objets de partie de réutilisation, et extraire les pages incluant les objets de partie de réutilisation sur une base d'au moins une page par objet de partie de réutilisation ;

un code pour créer des données d'image de référence exprimant un état d'image des données manuscrites ;

un code pour créer des données de trame en effectuant un processus de conversion des données manuscrites ;

un code pour spécifier, en utilisant les informations d'agencement des objets de partie de réutilisation, des zones d'agencement des objets de partie de réutilisation dans les données d'image de référence, et spécifier des zones d'agencement des objets de partie de réutilisation dans des données de trame ;

un code pour effectuer un premier processus de comparaison d'image au moins une fois par objet de partie de réutilisation, en utilisant un algorithme de comparaison prédéterminé, pour les zones d'agencement des objets de partie de réutilisation dans les données d'image de référence (B) concernant les pages extraites, et les zones d'agencement des objets de partie de réutilisation dans les données de trame (C) ; et

un code pour effectuer un deuxième processus de comparaison d'image par rapport à la pluralité de pages des données manuscrites, en utilisant un algorithme de comparaison à grande vitesse de vitesse de traitement plus rapide que l'algorithme de comparaison prédéterminé, pour les zones d'agencement des objets de partie de réutilisation dans les données de trame (C) mises au premier processus de comparaison d'image, et les zones d'agencement des objets de partie de réutilisation dans les données de trame (H) de chaque page des données manuscrites.

FIG.1

FIG.2

2

201    202    203

CPU    ROM    RAM

204

205

I/F

Reading device    HDD
P    Display device    Input device

206    207    208    209

Recording medium

210    CL

FIG.3

FIG.4

FIG.5

START

S1 — Analyze manuscript data

S2 — Extract pages including reusable part object

S3 — Create reference image data for each extracted page

S4 — RIP processing of each extracted page

S5 — Preliminary print inspection

S6 — All extracted pages finished?
No
Yes

S7 — Approve?
No
Yes

S8 — Create reference image data for each page

S9 — RIP processing of each page

S10 — Main print inspection

S11 — All pages finished?
No
Yes

S12 — Approve?
No
Yes

S13 — Revise manuscript data or Readjust inspection settings

END

## FIG.6

```
                    ( START )
                        │
    ┌───────────────────────────────────────┐        S51
    │   Create mask image A of reusable part │  ⟋
    │         object arrangement area        │
    └───────────────────────────────────────┘
                        │
    ┌───────────────────────────────────────┐        S52
    │ Create image B of only reusable part object │  ⟋
    │            arrangement area            │
    │ from mask image A and reference image  │
    └───────────────────────────────────────┘
                        │
    ┌───────────────────────────────────────┐        S53
    │ Create image C of only reusable part object │  ⟋
    │            arrangement area            │
    │   from mask image A and raster data    │
    └───────────────────────────────────────┘
                        │
    ┌───────────────────────────────────────┐        S54
    │ Compare image B and image C by precise │  ⟋
    │            compare algorithm           │
    │      and create difference image K     │
    └───────────────────────────────────────┘
                        │                             S55
    ┌───────────────────────────────────────┐  ⟋
    │   Save and display inspection results  │
    └───────────────────────────────────────┘
                        │
                    (  END  )
```

FIG.7

FIG.8

**EP 2 763 027 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004279445 A

- US 2012147413 A